# EUROPEAN PATENT APPLICATION

(11) **EP 3 926 533 A2**
(43) Date of publication of application: **22.12.2021**
(21) Application number: 21198213.7
(22) Date of filing: 22.09.2021
(51) Int. Cl.: G06K 9/00, G06K 9/46

(54) **METHOD AND APPARATUS FOR CHANGING HAIRSTYLE OF HUMAN OBJECT, DEVICE AND STORAGE MEDIUM**

(30) Priority: 30.11.2020 CN 202011379566
(71) Applicant: BEIJING BAIDU NETCOM SCIENCE TECHNOLOGY CO., LTD., No.10 Shangdi 10th Street Haidian District Beijing 100085 (CN)
(72) Inventor: GUO, Zhizhi, Beijing 100085 (CN); LIANG, Borong, Beijing 100085 (CN); HONG, Zhibin, Beijing 100085 (CN); HAN, Junyu, Beijing 100085 (CN)
(74) Representative: Zimmermann, Tankred Klaus

(57) **Abstract**

The present disclosure relates to a field of artificial intelligence technology, in particular to a field of computer vision and deep learning technology, and more particularly, a method (300) and an apparatus (1000) for changing a hairstyle of a character, a device (1100), and a storage medium are provided. The method includes: determining (310) an original feature vector (230) of an original image (110) containing the character, wherein the character in the original image (110) has an original hairstyle(210); acquiring (320) a boundary vector (250) associated with the original hairstyle (210) and a target hairstyle (220) based on a hairstyle classification model (240); determining (330) a target feature vector (260) corresponding to the target hairstyle (220) based on the original feature vector (230) and the boundary vector (250); and generating (340) a target image (120) containing the character based on the target feature vector (260), wherein the character in the target image (120) has the target hairstyle (220).

## Description

### TECHNICAL FIELD

The present disclosure relates to a field of artificial intelligence technology, and in particular to computer vision and deep learning technologies.

### BACKGROUND

In a field of artificial intelligence technology, a technical solution has been proposed to process an image containing a character for a computer vision and deep learning technologies. Specifically, in fields of beauty, hairdressing, medical beauty, image processing, etc., different hairstyles (such as long hair, short hair, straight hair, curly hair, etc.) may be designed for the user, in order to find a most suitable hairstyle for a user. At present, technical solutions to change the hairstyle based on a neural network technology are proposed, but performances of these technical solutions are not satisfactory. At this time, how to change the hairstyle of the character in a simpler and more effective way has become a technical challenge.

### SUMMARY

According to the example embodiments of the present disclosure, a scheme for changing a hairstyle of a character is provided.

In a first aspect of the present disclosure, a method for changing a hairstyle of a character is provided. The method includes: determining an original feature vector of an original image containing the character, in which the character in the original image has an original hairstyle; acquiring a boundary vector associated with the original hairstyle and a target hairstyle based on a hairstyle classification model; determining a target feature vector corresponding to the target hairstyle based on the original feature vector and the boundary vector; and generating a target image containing the character based on the target feature vector, in which the character in the target image has the target hairstyle.

In a second aspect of the present disclosure, an apparatus for changing a hairstyle of a character is provided. The apparatus includes: an original feature determination module configured to determine an original feature vector of an original image containing the character, in which the character in the original image has an original hairstyle; an acquisition module configured to acquire a boundary vector associated with the original hairstyle and a target hairstyle based on a hairstyle classification model; a target feature determination module configured to determine a target feature vector corresponding to the target hairstyle based on the original feature vector and the boundary vector; and a generation module configured to generate a target image containing the character based on the target feature vector, in which the character in the target image has the target hairstyle.

In a third aspect of the present disclosure, an electronic device is provided. The device includes: one or more processors; and a memory communicatively connected to the at least one processor; wherein the memory stores instructions executable by the at least one processor, and the instructions, when executed by the at least one processor, cause the at least one processor to implement the method according to the first aspect of the present disclosure.

In a fourth aspect of the present disclosure, a computer-readable storage medium storing computer instructions configured to cause a computer to implement the method according to the first aspect of the present disclosure is provided.

In a fifth aspect of the present disclosure, a computer program product including a computer program, wherein the computer program, when executed by a processor, implements the method according to the first aspect of the present disclosure is provided.

It should be understood that the content described in the summary is not intended to limit the key or important features of the embodiments of the present disclosure, nor is it intended to limit the scope of the present disclosure. Other features of the present disclosure will be easily understood by the following description.

### BRIEF DESCRIPTION OF THE DRAWINGS

The above mentioned and other features, advantages and aspects of various embodiments of the present disclosure will become more apparent in combination with the accompanying drawings and with reference to the following detailed description. In the accompanying drawings, the same or similar reference signs indicate the same or similar elements, in which:
FIG. 1 schematically shows a block diagram of an original image and a target image before and after changing a hairstyle;
FIG. 2 schematically shows a block diagram of a process for changing a hairstyle of a character according to the exemplary embodiments of the present disclosure;
FIG. 3 schematically shows a flow chart of a method for changing a hairstyle of a character according to the exemplary embodiments of the present disclosure;
FIG. 4 schematically shows a block diagram of a plurality of regions corresponding to an original image according to the exemplary embodiments of the present disclosure;
FIG. 5 schematically shows a block diagram of a process for generating an original feature vector based on an original image according to the exemplary embodiments of the present disclosure;
FIG. 6 schematically shows a block diagram of a data structure of a feature vector according to the exemplary embodiments of the present disclosure;
FIG. 7 schematically shows a block diagram of a process for acquiring a boundary vector according to the exemplary embodiments of the present disclosure;
FIG. 8 schematically shows a block diagram of a process for generating a target image according to the exemplary embodiments of the present disclosure;
FIG. 9A schematically shows a block diagram of an original image and a target image before and after changing a hairstyle according to the exemplary embodiments of the present disclosure;
FIG. 9B schematically shows a block diagram of an original image and a target image before and after changing a hairstyle according to the exemplary embodiments of the present disclosure;
FIG. 10 schematically shows a block diagram of an apparatus for changing a hairstyle of a character according to the exemplary embodiments of the present disclosure; and
FIG. 11 shows a block diagram of a computing device capable of implementing multiple embodiments of the present disclosure.

### DETAILED DESCRIPTION

Hereinafter, the embodiments of the present disclosure will be described in more detail with reference to the accompanying drawings. Although some embodiments of the present disclosure are shown in the accompanying drawings, it should be understood that the present disclosure may be implemented in various forms, and should not be construed as being limited to the embodiments set forth herein. On the contrary, these embodiments are provided for a more thorough and complete understanding of the present disclosure. It should be understood that the accompanying drawings and embodiments of the present disclosure are only used for exemplary purposes, and are not used to limit the protection scope of the present disclosure.

In the description of the embodiments of the present disclosure, the term "including" and its similar terms may be understood as open inclusion, namely "including but not limited to". The term "based" may be understood as "at least partially based". A term "an embodiment" or "the embodiment" may be understood as "at least one embodiment". The terms "first", "second" and so on may refer to different objects or a same object. Other clear and implied definitions may also be included below.

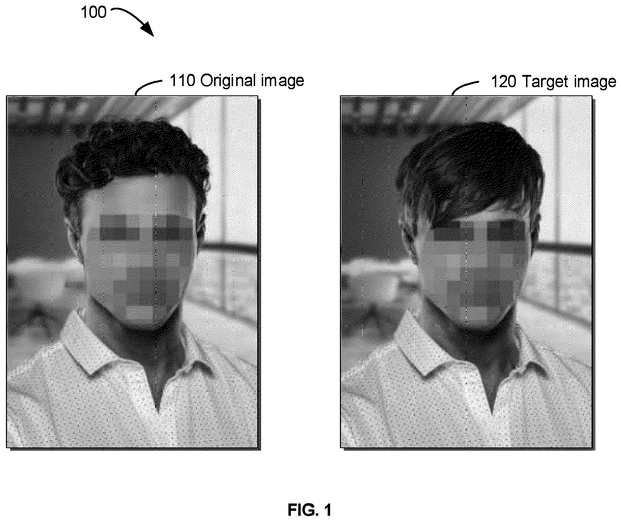

In the field of artificial intelligence technology, a technical solution of processing an image of a character for computer vision and deep learning technologies is provided. Specifically, in fields of beauty, hairdressing, medical beauty, image processing, etc., tools for designing different hairstyles (such as long hair, short hair, straight hair, curly hair, etc.) for the characters are provided. These tools may be used to find a most suitable hairstyle for a user. First, a process for changing the hairstyle is introduced with reference to FIG. 1. FIG. 1 schematically shows a block diagram 100 of an original image and a target image before and after changing the hairstyle. As shown in FIG. 1, the original image 110 may be provided, and a target image 120 containing a character with a changed hairstyle may be generated based on the original image 110.

Technical solutions of changing a hairstyle based on a neural network technology are provided. However, these technical solutions require a large amount of training data, and the quality of training data seriously affects an effect of the changed hairstyle. In addition, existing hairstyle changing models can only use preset hair models, such as for changing long hair to short hair, changing curly hair to straight hair, etc., and cannnot achieve a conversion between any hairstyles.

In order to at least partially solve shortcomings in the above-mentioned technical solutions, a technical solution for changing a hairstyle of a character is provided according to the exemplary embodiments of the present disclosure. According to the exemplary embodiments of the present disclosure, a feature vector of an image may be extracted from the original image 110, and the target image 120 related to a target hairstyle may be generated by adjusting the feature vector. Specifically, a concept of a boundary vector is proposed, and the boundary vector may represent a boundary between two hairstyles (for example, an original hairstyle "curly hair" and a target hairstyle "straight hair"). That is, for a feature vector of any image, a hairstyle of a character in the image may be changed to any of the two hairstyles based on the boundary vector. For example, the hairstyle of the character may be changed to the straight hair by determining a sum of the feature vector and the boundary vector; and the hairstyle of the character may be changed to the curly hair by determining a difference between the feature vector and the boundary vector.

According to the exemplary embodiments of the present disclosure, instead of obtaining a perfect hairstyle changing model by using a large amount of training images, a hairstyle classification model may be obtained based on less training images. Furthermore, one or more boundary vectors between different types of hairstyles may be obtained. In this way, by using various boundary vectors, a simple and effective conversion between different types of hairstyles may be achieved.

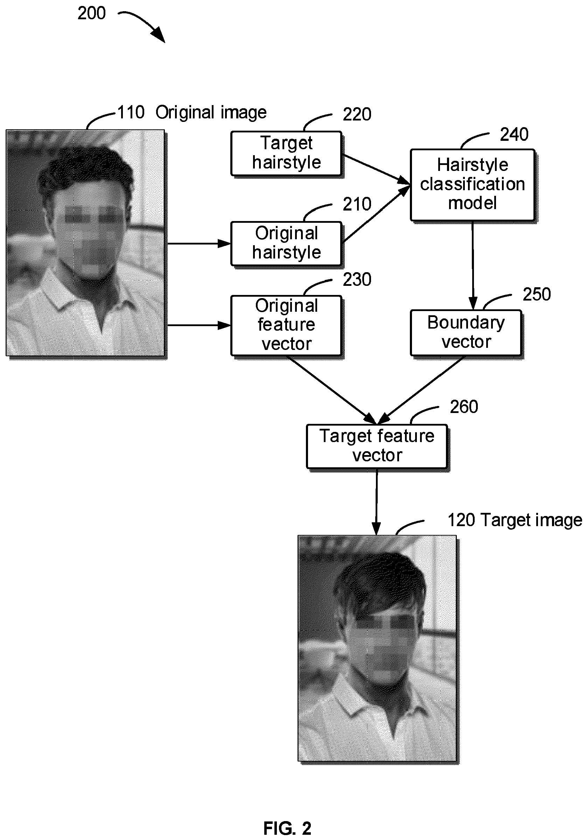

Hereinafter, the technical solution will be described briefly in FIG. 2. FIG. 2 schematically shows a block diagram of a process 200 for changing a hairstyle of a character according to the exemplary embodiments of the present disclosure. As shown in FIG. 2, an original hairstyle 210 (e.g., curly hair) of the character in the original image 110 may be determined and a desired target hairstyle 220 (for example, straight hair) may be acquired. At this time, a boundary vector 250 associated with the original hairstyle 210 and the target hairstyle 220 may be acquired based on the hairstyle classification model 240. Subsequently, a target feature vector 260 corresponding to the target hairstyle 220 may be determined based on the original feature vector 230 of the original image 110 and the boundary vector 250. The target feature vector 260 may be converted to a final target image 120 based on an inverse operation of the extraction of the original feature vector 230. At this time, the character in the target image 120 may include the target hairstyle 220, i.e. straight hair.

According to the exemplary embodiments of the present disclosure, a conversion between various hairstyles may be achieved. It should be understood that the hairstyle may involve multiple attributes. For example, attributes regarding curl degree may include straight hair and curly hair. Further, curly hair may be subdivided into more curling grades. For another example, attributes regarding color may include black hair, brown hair, yellow hair, white hair, etc. Thus, according to the exemplary embodiments of the present disclosure, the hairstyle may include at least one of the following attributes: a length, a curl degree, a color, a hair parting style, and a bangs style, etc.

According to the exemplary embodiments of the present disclosure, the number of attributes of the hairstyle to be changed is not limited, and the change may involve one or more attributes. In an example, the original hairstyle 210 may include short curly hair, and the target hairstyle 220 may include short straight hair, and in this case, the change only involves the curl degree and does not involve the length. In another example, the original hairstyle 210 may include short curly hair, and the target hairstyle 220 may include long straight hair, and in this case, the change for the hairstyle may involve both the length and the curl degree. In the following, the change of hairstyle involving one attribute will be described first.

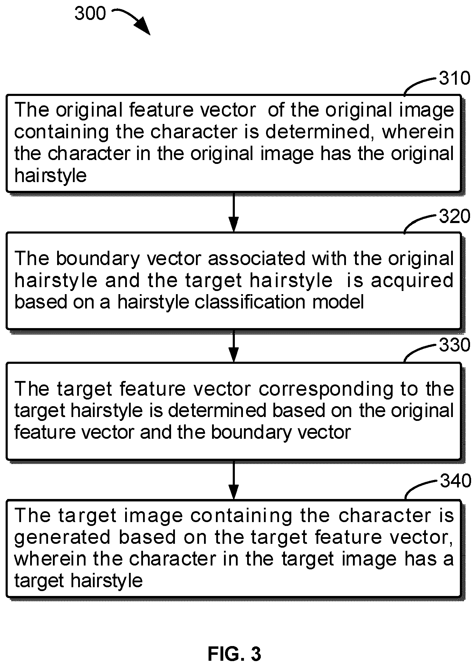

In the following, more details of the method according to the exemplary embodiments of the present disclosure will be described with reference to FIG. 3. FIG. 3 schematically shows a flowchart of a method 300 for changing a hairstyle of a character according to the exemplary embodiments of the present disclosure. At block 310, the original feature vector 230 of the original image 110 containing the character is determined, wherein the character in the original image 110 has the original hairstyle 210. It should be noted that the original image containing the character in this embodiment may come from a public data set.

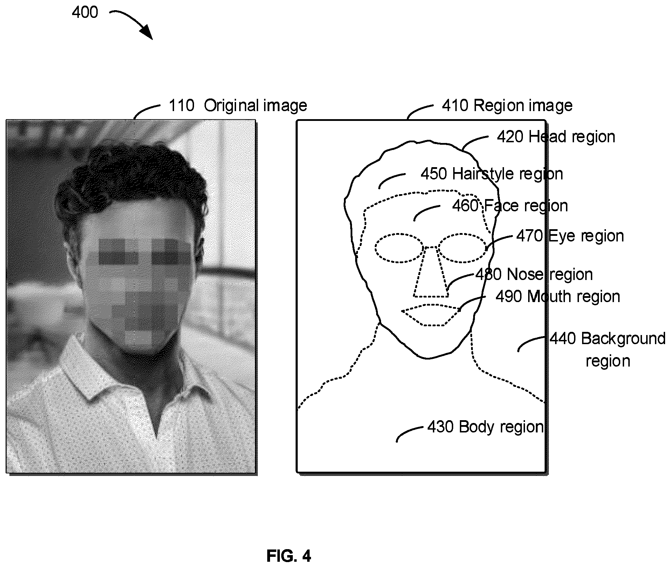

According to the exemplary embodiments of the present disclosure, the original image 110 may be divided into a plurality of regions according to a body structure of the character. In the following, more details about the division of regions will be described with reference to FIG. 4. FIG. 4 schematically shows a block diagram 400 of a plurality of regions corresponding to the original image according to the exemplary embodiments of the present disclosure. FIG. 4 shows the original image 110 on the left and a region image 410 including the plurality of regions corresponding to the original image 110 on the right. According to the exemplary embodiments of the present disclosure, a foreground region containing the character and a background region 440 may be determined first from the original image 110. The foreground region and the background region 440 may be determined based on a variety of technologies currently available and/or to be developed in the future.

According to the exemplary embodiments of the present disclosure, a head region 420 (as shown in a solid line region) may be determined from the foreground region of the original image 110 based on a head detection model, and a remaining portion of the foreground region may be regarded as a body region 430. The head detection model may be a model generated based on an existing mature technology. For example, the head detection model may be trained based on a machine learning technology. In this way, the head region 420 may be recognized from the original image 110 in a convenient and effective manner.

Further, a hairstyle region 450 may be determined in the head region 420 based on a key-point detection model. It should be understood that, the key-point detection model may be a model generated based on an existing mature technology. For example, the key-point detection model may be trained based on a machine learning technology. The model may detect key-points related to a hairline, a nose, eyes, and a mouth. Based on the detected key-points, the head region 420 may be divided into a hairstyle region 450, a face region 460, an eye region 470, a nose region 480, and a mouth region 490. In this way, the hairstyle region 450 and other regions of the face may be recognized from the original image 110 in a convenient and effective manner.

According to the exemplary embodiments of the present disclosure, in order to ensure that the generated original feature vector 230 may reflect an appearance of the character as accurately as possible, a normalization may be performed for the head region 420 in the original image 110 to eliminate an influence of illumination in an environment in which the character is located. For example, a mean value and/or a variance value of various pixels in the head region 420 may be determined, and the normalization may be performed based on the mean value and/or the variance value described above. In this way, the influence of ambient light on the head region 420 of the character may be eliminated, and a difference in brightness of the image caused by the unevenness of light and dark in part of the image may be reduced.

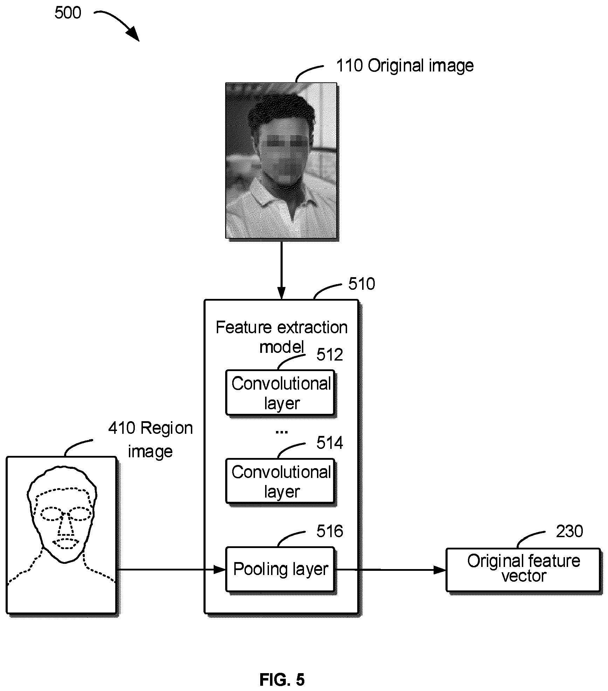

According to the exemplary embodiments of the present disclosure, a plurality of feature sub-vectors may be generated for the plurality of regions, respectively. Specifically, a feature sub-vector corresponding to each region may be generated, and the original feature vector 230 may be determined based on the plurality of feature sub-vectors. In the following, more details about generating feature vectors will be described with reference to FIG. 5. FIG. 5 schematically shows a block diagram of a process 500 for generating the original feature vector 230 based on the original image 110 according to the exemplary embodiments of the present disclosure. As shown in FIG. 5, the original feature vector 230 may be extracted from the original image 110 using a feature extraction model 510. According to the exemplary embodiments of the present disclosure, the feature extraction model 510 may be generated based on a machine learning technology currently available and/or to be developed in the future.

According to the exemplary embodiments of the present disclosure, the feature extraction model 510 may include convolutional layers 512,..., and 514. The above-mentioned convolutional layers may be used to determine a sub-feature for each region, respectively. Further, the feature extraction model 510 may include a pooling layer 516, and the pooling layer 516 may perform region-related pooling operations based on the plurality of regions marked in the region image 410, so as to generate the final original feature vector 230.

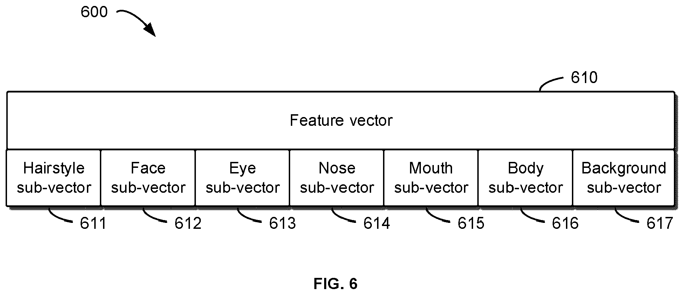

According to the exemplary embodiments of the present disclosure, the original feature vector 230 may be generated based on the sub-features for the plurality of regions. FIG. 6 schematically shows a block diagram of a data structure 600 of a feature vector according to the exemplary embodiments of the present disclosure. As shown in FIG. 6, the feature vector 610 may include a plurality of sub-vectors: a hairstyle sub-vector 611, a face sub-vector 612, an eye sub-vector 613, a nose sub-vector 614, a mouth sub-vector 615, a body sub-vector 616 and a background sub-vector 617.

It should be understood that FIG. 6 merely show an example of the data structure of the feature vector. According to the exemplary embodiments of the present disclosure, the feature vector 610 may include more or less sub-vectors, and the sub-vectors may be arranged in a different order. It should be understood that a dimension of the feature vector 610 and a dimension of each sub-vector may be customized. According to the exemplary embodiments of the present disclosure, since the purpose of the present disclosure is to change the hairstyle, the hairstyle sub-vector 611 may be stored in a higher precision (for example, 512 dimensions), and the background sub-vector 617 may be represented in a lower precision. According to the exemplary embodiments of the present disclosure, each sub-vector may also be represented in other dimensions.

The specific process for obtaining the original feature vector 230 from the original image 110 is described above with reference to FIGS. 4 to 6. The following will return to FIG. 3 to describe how to acquire the boundary vector 250. At block 320 of FIG. 3, the boundary vector 250 associated with the original hairstyle 110 and the target hairstyle 120 is acquired based on a hairstyle classification model 240. According to the exemplary embodiments of the present disclosure, the hair classification model 240 may be trained using training images, so as to obtain the boundary vector 250.

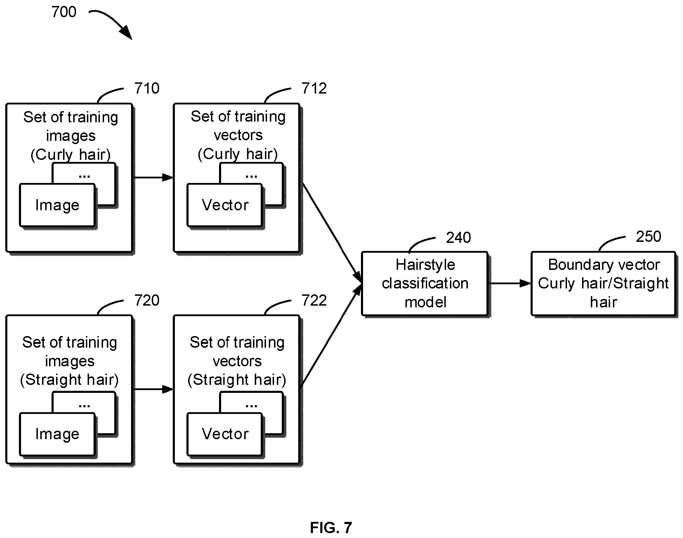

A plurality of training images associated with the original hairstyle 210 and the target hairstyle 220 may be acquired respectively, and the character in each training image may have the original hairstyle 210 or the target hairstyle 220. It should be noted that the training image containing the character in this embodiment may come from a public data set. According to the exemplary embodiments of the present disclosure, a large number of training images are not required, and a small number (for example, dozens or other number) of images including a plurality of hairstyles may be used. Specifically, FIG. 7 schematically shows a block diagram of a process 700 for acquiring the boundary vector 250 according to the exemplary embodiments of the present disclosure. As shown in FIG. 7, a set of training images 710 containing curly hair may be acquired, and a set of training images 720 containing straight hair may be acquired. The hair classification model 240 may be trained based on two sets of training images, respectively.

Each training image may be processed in accordance with the method shown above referring to FIGS. 4 to 6, so as to generate a feature vector for each training image. As shown in FIG. 7, a feature vector may be extracted from each training image in the set of training images 710 to generate a set of training vectors 712, and a feature vector may be extracted from each training image in the set of training images 720 to generate a set of training vectors 722. Further, the hair classification model 240 may be generated by using the sets of training vector 712 for images containing characters with curly hair and the set of training vectors 722 for images containing characters with straight hair.

According to the exemplary embodiments of the present disclosure, the hairstyle classification model 240 may be generated based on a machine learning technology currently available and/or to be developed in the future. The hair classification model 240 obtained by training may classify an input image into curly hair or straight hair based on a feature vector of the input image. A boundary vector indicating a boundary between the curly hair and the straight hair may be acquired from the hairstyle classification model 240. In other words, a feature vector on a side of a high-dimensional curved surface represented by the boundary vector is classified into curly hair, and a feature vector on another side of the high-dimensional curved surface represented by the boundary vector will be classified into straight hair.

At this time, for a feature vector of any image, a sum of the feature vector and the boundary vector may correspond to a hairstyle (for example, straight hair), and a difference between the feature vector and the boundary vector may correspond to another hairstyle (for example, curly hair). In this way, any hairstyle may be converted into curly hair or straight hair based on the boundary vector.

It should be understood that the above description only schematic illustrates the case that the curl degree includes two classes, i.e. the curly hair and the straight hair. According to the exemplary embodiments of the present disclosure, the curl degree may also include more grades. Assuming that the curl degree is divided into N grades, a hair classification model may be generated by using sets of training images containing hairstyles with different curl degrees based on the method described above. In this case, the generated hair classification model may classify the hairstyle of the character into N curling grades, and N-1 boundary vectors may be obtained.

It should be understood that the above description takes only the curly hair and the straight hair as examples to describe how to determine the boundary vector between the curly hair and the straight hair. According to the exemplary embodiments of the present disclosure, other attributes included in the hairstyle may also be processed. For example, the hair classification model 240 may be generated based on a set of training images contain characters having long hair and a set of training images contain characters having short hair respectively, so as to obtain a boundary vector between long hair and short hair. For a feature vector of any image, a sum of the boundary vector between long hair and short hair and the feature vector may correspond to a hairstyle (for example, short hair), and a difference between the feature vector and the boundary vector may correspond to another hairstyle (for example, long hair). In this way, any hairstyle may be converted into long hair or short hair based on the boundary vector.

For example, the hair classification model 240 may be generated based on a set of training image sets containing characters having black hair and a set of training image sets containing characters having brown hair respectively, so as to obtain a boundary vector between black hair and brown hair. For example, the hair classification model 240 may also be trained according to the hair parting style (for example, left side parting, central parting, right side parting, etc.). The hairstyle classification model may be trained according the bangs style (for example, no bangs, short bangs, long bangs, etc.). In this way, any hairstyle may be converted to include a specified color, hair parting style, and bangs style based on the boundary vector. A boundary vector between any two of the plurality of hairstyles may be determined in the manner as described above.

The case that the boundary vector relates to one attribute is described above. According to the exemplary embodiments of the present disclosure, the boundary vector may relate to varying of multiple attributes. Two sets of training images may include differences among multiple attributes. Characters A set of training images may contain characters having black curly hair, and another set of training images may contain characters having brown straight hair. In this case, a boundary vector between black curly hair and brown straight hair may be acquired based on the hair classification model.

The specific process for acquiring the boundary vector 250 based on the hairstyle classification model 240 is described above with reference to FIG. 7. The following will return to FIG. 3 to describe how to determine the target feature vector 260. At block 330 of FIG. 3, the target feature vector 260 corresponding to the target hairstyle 220 is determined based on the original feature vector 230 and the boundary vector 250. According to the exemplary embodiments of the present disclosure, the feature sub-vector, which corresponds to the hairstyle region 450, in the original feature vector 230 may be updated based on the boundary vector 250. It should be understood that the purpose of the exemplary embodiments according to the present disclosure is to change the hairstyle of the character, so that when changing a feature sub-vector, it is not necessary to change feature sub-vectors corresponding to other regions.

According to the exemplary embodiments of the present disclosure, assuming that the original feature vector 230 includes 2048 dimensions and a hairstyle sub-vector occupies dimensions 1 to 512, it is just required to change the data in the 1^{st} to 512^{th} dimensions based on the boundary vector 250. Specifically, the data in the 1^{st} to 512^{th} dimensions of the original feature vector 230 may be summed up with the boundary vector, thereby obtaining the target feature vector 260.

It should be understand that although only the process for changing one attribute included in the hairstyle is described above, multiple attributes included in the hairstyle may be changed at a time according to the exemplary embodiments of the present disclosure. For example, the curl degree and the color of the character's hair may be changed at the same time. Assuming that the character in the original image 110 has black curly hair, and the target hairstyle 220 may be set to brown straight hair. In this case, the original feature vector 230 may be updated based on the boundary vector between curly hair and straight hair and the boundary vector between black hair and brown hair, so as to obtain the target feature vector 260 corresponding to the brown straight hair. For example, the target feature vector 260 corresponding to brown straight hair may be determined based on the boundary vectors involving multiple attributes described above.

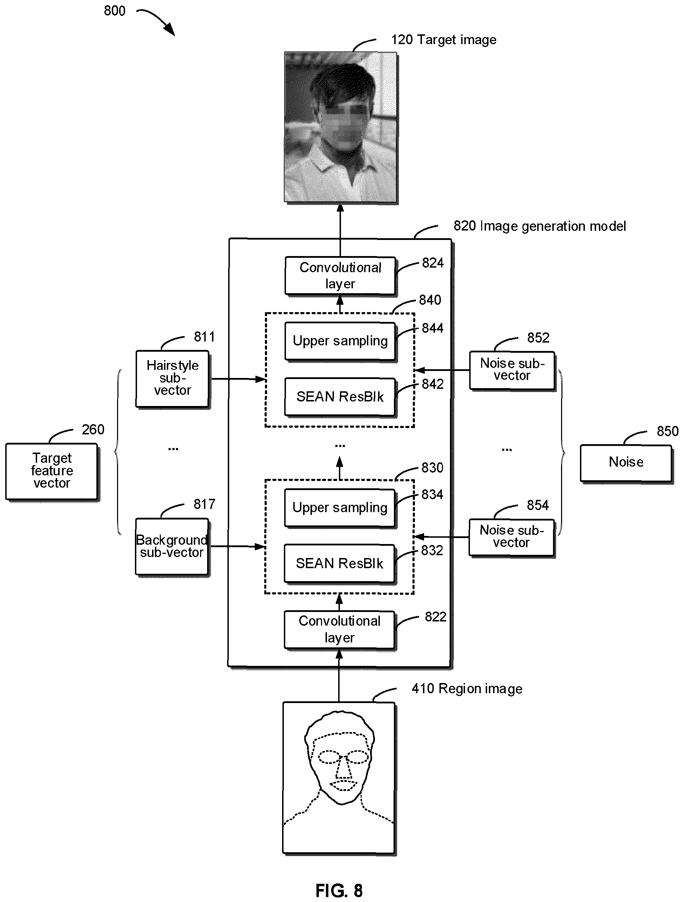

At block 340 of FIG. 3, the target image 120 containing the character is generated based on the target feature vector 260, wherein the character in the target image 120 has a target hairstyle 220. In the following, more details about generating the target image 120 are described with reference to FIG. 8. FIG. 8 schematically shows a block diagram of a process 800 for generating the target image 120 according to the exemplary embodiments of the present disclosure. As shown in FIG. 8, the target image 120 may be generated based on an image generation model 820, and the image generation model 820 performs an inverse operation of the process performed by the feature extraction model 510 shown in FIG. 5. The image generation model 820 may include a plurality of convolutional layers 822,..., and 824, and a plurality of sub-units 830,..., and 840 (including an upper sampling module and a SEAN ResBlk module).

As shown in FIG. 8, the target feature vector 260 includes a plurality of sub-vectors: a hairstyle sub-vector811,..., and a background sub-vector 817. The hairstyle sub-vector 811 includes data that is updated in accordance with the method described above. The sub-vectors may be processed by using the plurality of sub-units 830,..., and 840, respectively. For example, the background sub-vector 817 may be processed by using the sub-unit 830. The sub-unit 830 may include an upper sampling module 834 and a SEAN ResBlk (semantic region adaptive normalized resource block) module 832. The hairstyle sub-vector 811 may be processed by using the sub-unit 840 including an upper sampling module 844 and a SEAN ResBlk module 842. Although not shown, the image generation model 820 may include sub-units for processing other sub-vectors in the target feature vector 260. Further, the image generation model 820 may receive the region image 410 so as to determine a region corresponding to a respective sub-vector in the entire image, and thus output the final target image 120.

According to the exemplary embodiments of the present disclosure, noise data may be introduced to add variance in the original image 110. Specifically, the target image 120 may be generated based on both a noise vector for adjusting the target image and the target feature vector 260. It should be understood that the noise vector here may be used to adjust just a portion related to the hairstyle region 450. Alternatively and/or additionally, the noise vector may be used to adjust all regions of the image. As shown in FIG. 8, noise 850 may also be added, and the noise 850 may include noise sub-vectors 852,... and 854 associated with respective sub-vectors. In this way, content of each region in the target image 120 may be changed at different degrees. Thus, variance may be added in each region in order to enrich a visual effect of the target image 120.

It should be understood that as a character gets older, a hair loss may occur and lead to a change of a hairline. According to the exemplary embodiments of the present disclosure, the change of the hairline of the character may be simulated, to provide target images 120 containing hairlines with different heights. Specifically, an original hairline of the character in the original image 110 may be determined based on the hairstyle region 450. A position of a target hairline may be received, and a target hairline mask may be generated based on the original hairline and the target hairline. The hairline mask may control a region in which the changed hair is located. Further, the target image 120 may be generated based on the target feature vector 260 and the target hairline mask. As an example, in the target image 120, the hairline moving upward as the character getting older may be simulated. As another example, in the target image 120, the hairline returning to a young state after hair transplantation may be simulated.

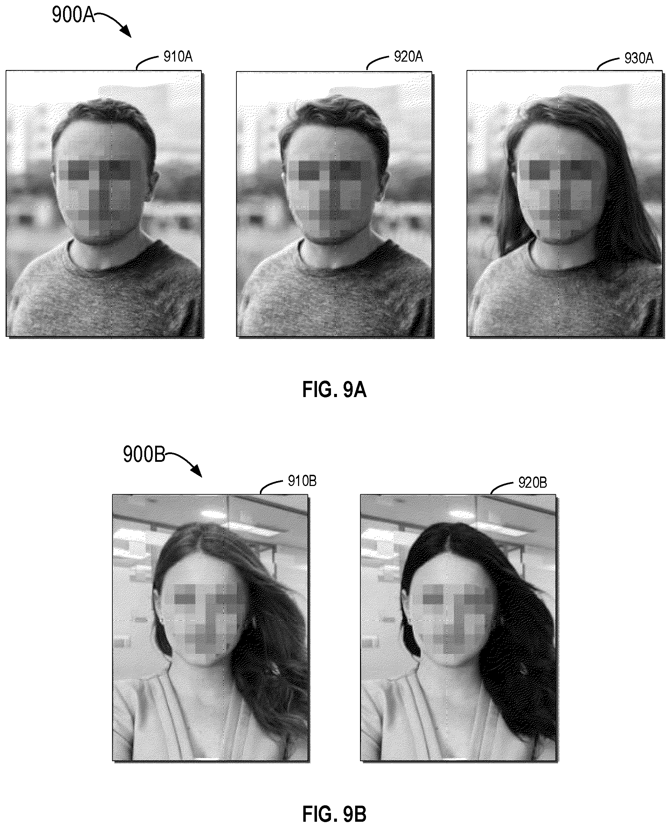

The specific process of various steps for changing the hairstyle of the character is described above with reference to FIGS. 2 to 8. In the following, a variance of hairstyle before and after being changed will be described with reference to FIGS. 9A and 9B, respectively. FIG. 9A schematically shows a block diagram 900A of the original image for a hairstyle before being changed and the target image for a hairstyle after being changed according to the exemplary embodiments of the present disclosure. In FIG. 9A, an image 910A represents the original image, in which the hairstyle of the character is short hair and the hairline is high. An image 920A represents the target image, in which a hair length of the character is slightly longer and the hairline is lower as compared to those in the original image. An image 930A is another target image, in which the hairstyle of the character is changed to long hair. FIG. 9B schematically shows a block diagram 900B of the original image for a hairstyle before being changed and the target image for a hairstyle after being changed according to the exemplary embodiments of the present disclosure. In FIG. 9B, the character in the original image 910B has long brown hair, while the character in the changed target image 920B has long black hair.

According to the exemplary embodiments of the present disclosure, a boundary vector between any two of the plurality of hairstyles may be obtained. Based on the above-mentioned boundary vector, any hairstyle of the character may be converted into a desired hairstyle. In this way, it is not necessary to use a large number of training images to obtain a conversion model between any two hairstyles, and a desired hairstyle classification model and thus a boundary vector related thereto may be obtained by using less training images. By using the method described above, the requirements for training data may be greatly reduced, a calculation amount of training process may be reduced and a realistic target image may be obtained.

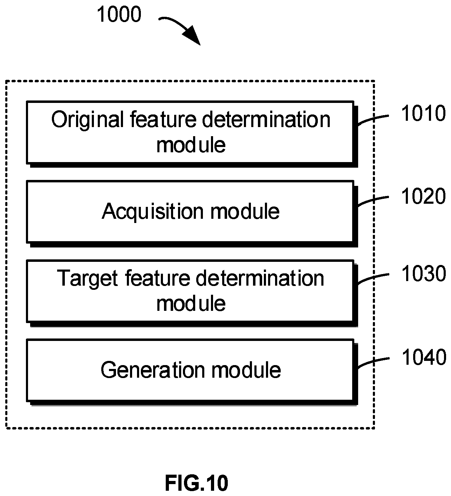

The embodiments of the method 300 for changing the hairstyle of the character are described in detail above. According to the exemplary embodiments of the present disclosure, an apparatus for changing the hairstyle of the character is also provided. In the following, it will be described in detail with reference to FIG. 10. FIG. 10 schematically shows a block diagram of an apparatus 1000 for changing a hairstyle of a character according to the exemplary embodiments of the present disclosure. As shown in FIG. 10, the apparatus 100 includes: an original feature determination module 1010 configured to determine an original feature vector of an original image containing the character, wherein the character in the original image has an original hairstyle; an acquisition module 1020 configured to acquire a boundary vector associated with the original hairstyle and a target hairstyle based on a hairstyle classification model; a target feature determination module 1030 configured to determine a target feature vector corresponding to the target hairstyle based on the original feature vector and the boundary vector; and a generation module 1040 configured to generate a target image containing the character based on the target feature vector, wherein the character in the target image has the target hairstyle.

According to the exemplary embodiments of the present disclosure, the original feature determination module 1010 includes: a division module configured to divide the original image into a plurality of regions according to a body structure of the character; a sub-vector generation module configured to generate a plurality of feature sub-vectors for the plurality of regions respectively; and a vector determination module configured to determine the original feature vector based on the plurality of feature sub-vectors.

According to the exemplary embodiments of the present disclosure, the division module includes: a head region determination module configured to determine a head region in the original image based on a head detection model; and a hairstyle region determination module configured to determine a hairstyle region in the head region based on a key-point detection model.

According to the exemplary embodiments of the present disclosure, the apparatus 1000 further includes: a normalization module configured to normalize the original image to eliminate an influence of illumination in an environment in which the character is located.

According to the exemplary embodiments of the present disclosure, the acquisition module 1020 includes: a training image acquisition module configured to acquire a plurality of sets of training images, in which each set of training images contains characters having one of a plurality of hairstyles; a training feature determination module configured to determine a feature vector of each training image in each set of training images; a classification model generation module configured to generate the hairstyle classification model based on the feature vector of each training image and the hairstyle of the character in the each training image; and a boundary vector determination module configured to determine the boundary vector describing between any two of the plurality of hairstyles based on the hairstyle classification model.

According to the exemplary embodiments of the present disclosure, the target feature determination module 1030 includes: an updating module configured to update a feature sub-vector corresponding to the hairstyle region in the original feature vector based on the boundary vector.

According to the exemplary embodiments of the present disclosure, the generation module 1040 further includes: a hairline determination module configured to determine an original hairline of the character in the original image based on the hairstyle region; a mask generation module configured to generate a target hairline mask based on the original hairline and a target hairline; and a target image generation module configured to generate the target image based on the target feature vector and the target hairline mask.

According to the exemplary embodiments of the present disclosure, the generation module 1040 further includes: a noise module configured to generate the target image based on the target feature vector and a noise vector for adjusting the target image.

According to the exemplary embodiments of the present disclosure, each of the original hairstyle and the target hairstyle includes at least one of: an attribute of length, an attribute of curl degree, an attribute of color, an attribute of hair parting style, and an attribute of bangs style.

Collecting, storing, using, processing, transmitting, providing, and disclosing etc. of the personal information of the user involved in the present disclosure all comply with the relevant laws and regulations, and do not violate the public order and morals.

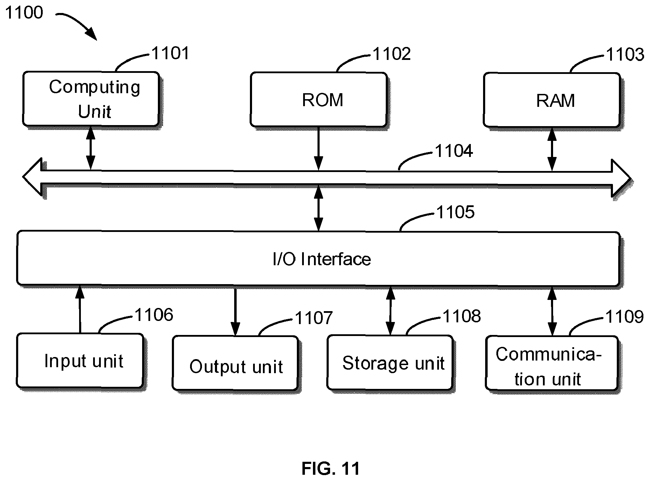

FIG. 11 shows a block diagram of an electronic device 1100 implementing the embodiments of the present disclosure. The device 1100 may be used to implement the method described in FIG. 3. As shown in the figure, the device 1100 includes a computing unit 1101, e.g. a central processing unit (CPU), which may perform various appropriate actions and processing based on computer program instructions stored in a read-only memory (ROM) 1102 or computer program instructions loaded from a storage unit 1108 to a random access memory (RAM) 1103. In the RAM 1103, various programs and data required for the operation of the device 1100 may also be stored. The CPU 1101, the ROM 1102, and the RAM 1103 are connected to each other through a bus 1104. An input/output (I/O) interface 1105 is also connected to the bus 1104.

Multiple components in the device 1100 are connected to the I/O interface 1105. The multiple components include: an input unit 1106, such as a keyboard, a mouse, etc.; an output unit 1107, such as various types of displays, speakers, etc.; and a storage unit 1108, such as a disk, an optical disc, etc.; and a communication unit 1109, such as a network card, a modem, a wireless communication transceiver, etc. The communication unit 1109 allows the device 1100 to exchange information/data with other devices through a computer network such as the Internet and/or various telecommunication networks.

The processing unit 1101 executes the various methods and processes described above, for example, the method 300. For example, in some implementations, the method 300 may be implemented as a computer software program, which is tangibly contained in a machine-readable medium, such as the storage unit 1108. In some implementations, the computer programs may be partly or entirely loaded and/or installed on the device 1100 via the ROM 1102 and/or the communication unit 1109. When the computer program is loaded into the RAM 1103 and executed by the CPU 1101, one or more steps of the method 300 described above may be executed. Alternatively, in other implementations, the CPU 1101 may be configured to execute the method 300 in any other suitable manner (for example, by means of firmware).

According to the exemplary embodiments of the present disclosure, a computer-readable storage medium having a computer program stored thereon is provided. When the program is executed by the processor, the method described in the present disclosure is implemented.

The functions described hereinabove may be performed at least in part by one or more hardware logic components. For example, without limitation, exemplary types of hardware logic components that may be used include: field programmable gate array (FPGA), application specific integrated circuit (ASIC), application specific standard product (ASSP), system on chip system (SOC), complex programming logic device (CPLD) and so on.

The program codes used to implement the method of the present disclosure may be written in any combination of one or more programming languages. These program codes may be provided to the processors or controllers of general-purpose computers, special-purpose computers, or other programmable data processing apparatus, so that when the program codes are executed by the processors or controllers, the functions/operations specified in the flowcharts and/or block diagrams are implemented. The program codes may be executed entirely on the machine, executed partly on the machine, executed partly on the machine as an independent software package, executed partly on the remote machine and partly on the remote machine, or executed entirely on the remote machine or server. The server may be a cloud server, a server of a distributed system, or a server in combination with block chains.

In the context of the present disclosure, a machine-readable medium may be a tangible medium, which may contain or store a program for use by an instruction execution system, apparatus, or device, or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage medium may include electrical connections based on one or more wires, portable computer disks, hard disks, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

In addition, although the operations are depicted in a specific order, this should be understood as requiring such operations to be performed in the specific order shown or in a sequential order, or requiring all illustrated operations to be performed to achieve the desired results. Under certain circumstances, multitasking and parallel processing may be advantageous. Likewise, although several specific implementation details are included in the above discussion, these should not be construed as limiting the scope of the present disclosure. Certain features that are described in the context of separate implementations can also be implemented in combination in a single implementation. Conversely, various features that are described in the context of a single implementation can also be implemented in multiple implementations individually or in any suitable sub-combination.

Although the subject matter has been described in language specific to structural features and/or method logical actions, it should be understood that the subject matter defined in the appended claims is not necessarily limited to the specific features or actions described above. On the contrary, the specific features and actions described above are merely exemplary forms of implementing the claims.

## Claims

1. A method (300) for changing a hairstyle of a character, comprising:
determining (310) an original feature vector (230) of an original image (110) containing the character, wherein the character in the original image (110) has an original hairstyle (210);
acquiring (320) a boundary vector (250) associated with the original hairstyle (210) and a target hairstyle (220) based on a hairstyle classification model (240);
determining (330) a target feature vector (260) corresponding to the target hairstyle (220) based on the original feature vector (230) and the boundary vector (250); and
generating (340) a target image (120) containing the character based on the target feature vector (260), wherein the character in the target image (120) has the target hairstyle.

2. The method according to claim 1, wherein determining (310) the original feature vector (230) comprises:
dividing the original image (110) into a plurality of regions (410, 420, 430, 440, 450, 460, 470, 480, 490) according to a body structure of the character;
generating a plurality of feature sub-vectors (611, 612, 613, 614, 615, 616, 617) for the plurality of regions (410, 420, 430, 440, 450, 460, 470, 480, 490) respectively; and
determining the original feature vector (230) based on the plurality of feature sub-vectors (410, 420, 430, 440, 450, 460, 470, 480, 490).

3. The method according to claim 2, wherein dividing the original image (110) into the plurality of regions (410, 420, 430, 440, 450, 460, 470, 480, 490) comprises:
determining a head region (420) in the original image (110) based on a head detection model; and
determining a hairstyle region (450) in the head region (420) based on a key-point detection model.

4. The method according to any one of the proceeding claims, further comprises:
normalizing the original image (110) to eliminate an influence of illumination in an environment in which the character is located.

5. The method according to any one of the proceeding claims, wherein acquiring the boundary vector comprises:
acquiring a plurality of sets of training images (710, 712), each set of training images containing characters having one of a plurality of hairstyles;
determining a feature vector (712, 722) of each training image in each set of training images;
generating the hairstyle classification model based on the feature vector (712, 722) of each training image and the hairstyle of the character in the each training image; and
determining the boundary vector (250) describing a boundary between any two of the plurality of hairstyles based on the hairstyle classification model (240).

6. The method according to any one of the proceeding claims, wherein determining (330) the target feature vector (260) comprises:
updating a feature sub-vector (611) corresponding to the hairstyle region (450) in the original feature vector (110) based on the boundary vector (250).

7. The method according to any one of the proceeding claims, wherein generating (340) the target image (120) further comprises:
determining an original hairline of the character in the original image (110) based on the hairstyle region (450);
generating a target hairline mask based on the original hairline and a target hairline; and
generating the target image (120) based on the target feature vector (260) and the target hairline mask.

8. The method according to any one of the proceeding claims, wherein (340) generating the target image (120) further comprises:
generating the target image (120) based on the target feature vector (260) and a noise vector (850) configured for adjusting the target image (120).

9. The method according to any one of the proceeding claims, wherein any one of the original hairstyle (210) and the target hairstyle (220) comprises at least one of: an attribute of length, an attribute of curl degree, an attribute of color, an attribute of hair parting style, and an attribute of bangs style.

10. An apparatus (1000) for changing a hairstyle of a character, comprising:
an original feature determination module (1010) configured to determine an original feature vector of an original image containing the character, wherein the character in the original image has an original hairstyle;
an acquisition module (1020) configured to acquire a boundary vector associated with the original hairstyle and a target hairstyle based on a hairstyle classification model;
a target feature determination module (1030) configured to determine a target feature vector corresponding to the target hairstyle based on the original feature vector and the boundary vector; and
a generation module (1040) configured to generate a target image containing the character based on the target feature vector, wherein the character in the target image has the target hairstyle.

11. The apparatus according to claim 10, wherein the original feature determination module (1010) comprises:
a division module configured to divide the original image into a plurality of regions according to a body structure of the character;
a sub-vector generation module configured to generate a plurality of feature sub-vectors for the plurality of regions respectively; and
a vector determination module configured to determine the original feature vector based on the plurality of feature sub-vectors.

12. The apparatus according to claim 11, wherein the division module comprises:
a head region determination module configured to determine a head region in the original image based on a head detection model; and
a hairstyle region determination module configured to determine a hairstyle region in the head region based on a key-point detection model.

13. An electronic device (1100) comprising:
one or more processors (1101); and
a memory (1102, 1103, 1108) communicatively connected to the at least one processor (1101);
wherein the memory (1102, 1103, 1108) stores instructions executable by the at least one processor (1101), and the instructions, when executed by the at least one processor (1101), cause the at least one processor (1101) to implement the method of any one of claims 1-9.

14. A computer-readable storage medium storing computer instructions configured to cause a computer to implement the method of any one of claims 1-9.

15. A computer program product including a computer program, wherein the computer program, when executed by a processor, implements the method of any one of claims 1-9.
